# EUROPEAN PATENT APPLICATION

(11) **EP 1 726 841 A1**
(43) Date of publication of application: **29.11.2006**
(21) Application number: 05720320.0
(22) Date of filing: 09.03.2005
(51) Int. Cl.: F16D 25/08, F16D 25/12

(54) **HYDRAULIC CLUTCH RELEASING DEVICE**

(30) Priority: 19.03.2004 JP 2004079520; 24.09.2004 JP 2004276652
(71) Applicant: AISIN SEIKI KABUSHIKI KAISHA, Kariya-shi, Aichi-ken 448-8650 (JP)
(72) Inventor: HATTORI, Yasuaki, AISIN SEIKI KABUSHIKI KAISHA, Kariya-shi, Aichi-ken 448-8650 (JP); NAKAMURA, Toshiyuki, AISIN ENGINEERING CO., LTD., Aichi 448-8605 (JP)
(74) Representative: Kramer - Barske - Schmidtchen
(86) International application number: PCT/JP2005/004048
(87) International publication number: WO 2005/090812

(57) **Abstract**

A hydraulic clutch releasing device (1) enabling the maximum reduction of production cost, comprising a tube member (16) disposed between an outer housing and a piston member and which may be brought into contact with an inner housing, a first seal member (14) disposed between the outer housing and the piston member and between the outer housing and the tube member, and a second seal member (15) disposed between the inner housing and the piston member and following up the movement of the piston member. A hydraulic chamber (17) is formed between the inner housing and the outer housing by the inner housing (11), the outer housing (12), and the piston member (13). The piston member and a release bearing are moved in the axial direction of a drive shaft (2) by hydraulic pressure in the hydraulic chamber to disengage the clutch.

## Description

### Field of the Present invention

The present invention relates a hydraulic clutch releasing device having a hydraulic chamber formed between an inner housing and an outer housing by the inner housing, the outer housing, and a piston member in which the piston member and a release bearing are moved in the axial direction of a drive shaft by hydraulic pressure in the hydraulic chamber to disengage the clutch.

### Description of Related Art

A hydraulic clutch unit (hydraulic clutch releasing device) having a sleeve fixed and fitted outside of an input shaft of a transmission with an annular cylinder portion formed at an outer circumference of the sleeve, a supporting member for supporting a release bearing with cylindrical piston portion arranged into the sleeve to slide freely and fitted into the cylinder portion, and a seal member disposed at an end of the piston portion to seal a sliding portion between the piston portion and the cylinder portion is disclosed in various kind of documents (See, e.g., Patent Document 1).

A hydraulic clutch release disengaging device (hydraulic clutch releasing device) having a hydraulic chamber formed between an inner housing and an outer housing by the inner housing, the outer housing, and a piston member in which the piston member and a release bearing are moved in the axial direction of a drive shaft by hydraulic pressure in the hydraulic chamber to disengage the clutch is disclosed in various kind of documents including Patent Document 2.

Because the hydraulic clutch releasing device of this kind has a structure in which a seal member (seal ring) slides along internal wall surfaces of a cylinder portion, the wall surfaces of both sides of the cylinder portion must be fabricated with a high accuracy and a good surface condition. Therefore in case of a cylinder made of metal, it needs an expensive machining cost and in case of a cylinder made of synthetic resin, it's difficult to fabricate the cylinder due to the problems such as small scratches of the slide surfaces and gradient for mold-removal.

In light of these problems, another hydraulic clutch releasing device has been proposed in which the seal member is divided into two seal members, a second seal member fixed with the piston member slides only along an external surface of the inner housing, and a first seal member fixed with the outer housing slides only along an external surface of the piston member. Such kind of structure enables to reduce portions requiring machining of the outer housing, because the high accuracy of machining is needed only around a portion to receive the first seal member of the outer housing. Therefore, besides providing a low price hydraulic clutch releasing device, the axial length of the hydraulic clutch releasing device will be reduced because the seal member will not cover a hydraulic oil inlet channel port even when a neutral position of the piston member is shifted backward of the cylinder through the wear of a clutch friction material (See Patent Document 3).

Patent Document 1: JP-A-H01-176816
Patent Document 2: JP-A-H10-220496
Patent Document 3: DE 4427942 A1 (1995)

### Disclosure of the invention

### Problems to be Solved

However, there is a problem in that the structure disclosed in the Patent Document 3 is not able to reduce the production cost of the housing to the maximum extent because the receiving structure of the first seal member of the outer housing requires turning machining step. Also there is a drawback of low productivity caused by assembling steps that the second seal must be expanded after the seal is folded to radially inner direction and inserted into a groove for assembling the first seal member into an internal groove of the outer housing.

Such kind of hydraulic clutch releasing device is disposed inside a clutch housing and it is necessary to prevent the clutch from non-operability due to damages caused by taint or dust on the seal members to keep a hydraulic pressure or surfaces contacting the seal members. To accomplish this purpose, Patent Document 2 discloses bellows boot made of rubber disposed outside of a cylinder portion. However, such a structure requires an additional space in the radial direction for folding bellows to ensure a range of movement of the release bearing and an axial space for the tight adherence, which offers difficulty in downsizing the device.

Patent Document 3 discloses a cylindrical wall extending from the outer housing of the cylinder portion to cover the release bearing (when compressed). In this case the release bearing may be pushed out of the cylindrical wall of the outer housing when the release bearing is at a full stroke position, and there is a possibility that inside of the cylindrical wall may be stained by incoming taint or dust, which may bring about damages to the seal members by the taint or dust. And also the device of the Patent Document 3 needs a space for the release bearing radially outside as the case with the bellows-type device of Patent Document 2, making it difficult to downsize the device.

It is a first object of the present invention to provide a hydraulic clutch releasing device that enables the maximum reduction of production cost.

It is a second object of the present invention to provide a hydraulic clutch releasing device-that assures high productivity.

It is a third object of the present invention to provide a hydraulic clutch releasing device that protects seal members and surfaces contacting the seal members from taint or dust and also can realize downsizing of the device.

### Means to Solve the Problems

In a first aspect of the present invention, a hydraulic clutch releasing device is characterized by comprising: an annular inner housing surrounding a drive shaft; an outer housing surrounding the inner housing, an annular piston member disposed between the inner housing and the outer housing movable in the axial direction of the drive shaft; a release bearing disposed neighboring with the piston member in the axial direction of the drive shaft and movable in the axial direction of the drive shaft; a tube member which is disposed between the outer housing and the piston member and which may contact with the inner housing, a first seal member disposed between the outer housing and the piston member and between the outer housing and the tube member; and a second seal member disposed between the inner housing and the piston member so as to follow up the movement of the piston member; wherein a hydraulic chamber is formed between the inner housing and the outer housing by the inner housing, the outer housing and the piston member, and the clutch is disengaged by moving the piston member and the release bearing in the axial direction of the drive shaft by hydraulic pressure in the hydraulic chamber.

In the hydraulic clutch releasing device of the present invention, the tube member is preferably disposed with a clearance in the axial direction of the drive shaft relative to the inner housing and the first seal member.

In a second aspect of the present invention, the hydraulic clutch releasing device is characterized in that the tube member has a channel portion to form an orifice for pressurized hydraulic oil by contacting with the inner housing, and is formulated such that the tube member moves apart from a contacting face of the inner housing when the piston member is pushed out toward the release bearing side.

In a third aspect of the present invention, the hydraulic clutch releasing device is characterized in that the tube member has a predetermined fitting clearance relative to an external surface of the piston member.

In a fourth aspect of the present invention, the hydraulic clutch releasing device is characterized in that the outer housing has a stopper portion on its internal circumferential surface and the tube member has a counter-stopper portion which is engaged with the stopper portion.

In the hydraulic clutch releasing device of the present invention, it is preferred that the device comprises: a first cylindrical member directly or indirectly mounted to the piston member and disposed to cover the outer housing, and a second cylindrical member disposed within an internal side of the first cylindrical member and also disposed on an external side of the outer housing, and the first cylindrical member and the second cylindrical member seal up the hydraulic chamber from the exterior.

In the hydraulic clutch releasing device of the present invention, the second cylindrical member preferably slides relative to the internal surface of the first cylindrical member and the external surface of the internal [sic outer] housing.

In a fifth aspect of the present invention, there is provided a hydraulic clutch releasing device having a hydraulic chamber formed between an inner housing and an outer housing by the inner housing, the outer housing, and a piston member in which the piston member and a release bearing are moved in the axial direction of a drive shaft by hydraulic pressure in the hydraulic chamber to disengage the clutch, characterized by further comprising: a first cylindrical member directly or indirectly mounted to the piston member and disposed to cover the outer housing; and a second cylindrical member disposed slidably within an internal surface of the first cylindrical member and also slidably on an external surface of the outer housing.

In the hydraulic clutch releasing device of the present invention, the device preferably comprises a compression ring disposed on an external side of the first cylindrical member and holds the second cylindrical member compressively.

In the hydraulic clutch releasing device of the present invention, the device preferably comprises a spring member disposed between the first cylindrical member and the second cylindrical member so as to push the first cylindrical member and the second cylindrical member against one another.

In the hydraulic clutch releasing device of the present invention, the second cylindrical member preferably comprises a protruding portion on an external surface, and the first cylindrical member preferably comprises a guide groove on the internal surface to guide a slide of the protruding portion.

### Effects of the Present invention

According to the present invention (Claims 1 and 2), because of the tube member disposed at the axial space between the outer housing and the piston member to restrict the axial movement of the first seal member, machining of an internal groove of the outer housing for receiving the first seal member is eliminated, therefore freed from machining steps of the internal portion of the housing, and consequently, the production cost will be reduced by using die-casting or resin molding method and also it makes possible to assemble inner parts easily.

According to the present invention (Claim 3), a restricted (throttled) oil channel portion disposed at the end of the tube member regulates hydraulic flow rate even when a clutch pedal was quickly returned and prevent transmission of an excessive torque caused by quick clutch-engaging. It may generate an anxiety that such a channel portion having an orifice (or throttle) may cause a resistance of hydraulic flow when a pedal is stepped down during normal clutch operation to induce uncomfortable heavy feeling of the pedal. However, because the inner diameter of the tube member is designed to have an appropriate fitting clearance relative to the piston, the tube member also moves to open the orifice when the piston member operates to disengage the clutch, resulting in no resistance to stepping down of the pedal.

According to the present invention (Claim 4), once the fitting clearance between the tube member and the piston member is adjusted (set to a small value), the piston member moves without resistance in case where the piston member is pushed in the reverse direction to the stroke when a posture of diaphragm spring is changed by abrasion (wear) of clutch friction disk.

According to the present invention (Claim 5), by disposing a stopper portion on the outer housing, the tube member is stopped by the stopper portion of the outer housing when the piston member is pushed out toward the release bearing, therefore the tube member does not squash the first seal member.

According to the present invention (Claims 6 to 14), the first cylindrical member and the second cylindrical member protect the seal members and surfaces contacting them and also realize the downsizing of the device.

According to the present invention (Claims 8 and 12), the second cylindrical member is received into the first cylindrical member in accordance with decreasing in the mounting height (axial length) of hydraulic release cylinder due to abrasion (wear) of clutch facing, shortening of the outer housing is not obstacled.

According to the present invention (Claims 9 and 13), the second spring member disposed between the first cylindrical member and the second cylindrical member makes the cylindrical guides to follow up the movement of the release bearing in the axial direction such that an overlapping area over the outer housing is increased, therefore it's more effective to protect the seal members and surfaces contacting the seal members from damage.

### Brief Description of the Drawings

Figure 1 illustrates a cross-sectional view of a structure of a hydraulic clutch releasing device in accordance with embodiment 1 of the present invention.
Figure 2 illustrates a cross-sectional view of a structure of a hydraulic clutch releasing device in accordance with embodiment 2 of the present invention.
Figure 3 illustrates a partial cross-sectional view of a structure of a hydraulic clutch releasing device in accordance with embodiment 3 of the present invention.
Figure 4 illustrates an enlarged partial cross-sectional view of a part including a first cylindrical member and a second cylindrical member of a hydraulic clutch releasing device in accordance with embodiment 3 of the present invention.
Figure 5 illustrates an enlarged partial cross-sectional view indicating a state of a first cylindrical member and a second cylindrical member when a clutch facing of the hydraulic clutch releasing device in accordance with embodiment 3 of the present invention is worn.
Figure 6 illustrates an enlarged partial cross-sectional view of a structure of a hydraulic clutch releasing device in accordance with embodiment 4 of the present invention.
Figure 7 illustrates a cross-sectional view of a structure of a hydraulic clutch releasing device in accordance with embodiment 5 of the present invention.
Figure 8 illustrates a cross-sectional view of a structure of a hydraulic clutch releasing device in accordance with embodiment 6 of the present invention.

### Explanation of Symbols

- 1: hydraulic clutch releasing device
- 2: drive shaft
- 11: inner housing
- 11a: tubular portion
- 11b: flange portion
- 12: outer housing
- 12a: shoulder portion
- 12b: hydraulic channel
- 12c: stopper portion
- 13: piston member
- 13a: mounting portion
- 13b: shoulder portion
- 14: first seal member
- 15: second seal member
- 16: tube member
- 16a: channel portion
- 16b: counter-stopper portion
- 17: hydraulic chamber
- 18: release bearing
- 18a: inner lace
- 18b: outer lace
- 19: spring member
- 20: (first) cylindrical member
- 20a: flange portion
- 20b: guide groove
- 20c: shoulder portion
- 20d: stopper portion
- 21: compression ring
- 22: second cylindrical member
- 22a: protruding portion
- 22b: flange portion
- 23: second spring member

### Detailed Description of the Preferred Embodiments(Best Mode for Carrying Out the Present invention)

### (Embodiment 1)

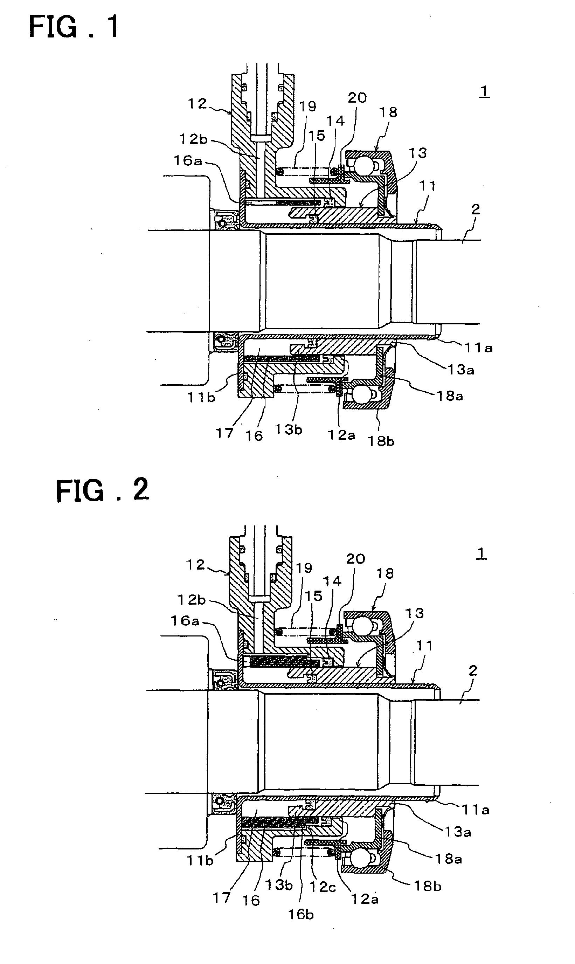

An embodiment 1 is explained using a figure. Figure 1 illustrates a cross-sectional view of a structure of a hydraulic clutch releasing device in accordance with embodiment 1 of the present invention.

A hydraulic clutch releasing device 1 comprises an inner housing 11, an outer housing 12, a piston member 13, a first seal member 14, a second seal member 15, a tube member 16, a hydraulic chamber 17, a release bearing 18, a spring member 19, and a cylindrical member 20.

The inner housing 11 is an annular (drum-shaped, tubular) member and comprises a tubular portion 11a and a flange portion 11b. The tubular portion 11a surrounds a drive shaft 2 of a transmission. The flange portion 11b is an extending portion toward radial direction from one edge of the tubular portion 11a. The inner housing 11 is fixed on a clutch housing (not shown) through which the shaft 2 is passed. The drive shaft 2 is an input shaft for transmission of a car.

The outer housing 12 is disposed surrounding the inner housing 11 and comprises a shoulder portion 12a and a hydraulic channel 12b. The shoulder portion 12a is a portion for receiving the first seal member 14, that is, a shoulder-shaped portion incurved from an edge on the side of the release bearing 18. The hydraulic channel 12b is a passage of hydraulic oil provided from a clutch master cylinder (not shown) and so on.

The piston member 13 is disposed between the inner housing 11 and the outer housing 12, hydraulically slides in the axial direction of the drive shaft 2 and comprises an mounting portion 13a and a shoulder portion 13b. The mounting portion 13a is a portion for mounting the release bearing 18, not covered by the outer housing 12, and disposed at an external surface of the inner housing 11. The shoulder portion 13b receives the second seal member 15 and is shoulder-shaped portion, protruding toward the hydraulic chamber 17.

The first seal member 14 is an annular seal member hermetically sealing the hydraulic chamber 17 and is received between the outer housing 12 and the piston member 13, and between the tube member 16 and the shoulder portion 12a of the outer housing 12. The first seal member 14 is engaged for stopping by the shoulder portion 12a of the outer housing 12 when the piston member 13 moves toward the release bearing 18, and is stopped by the tube member 16 when the piston member 13 moves away from the release bearing 18.

The second seal member 15 is an annular seal member sealing the hydraulic chamber 17 disposed between the inner housing 11 and the piston member 13, and is received in the shoulder portion 13b of the piston member 13 to move (follow) in the axial direction of the drive shaft 2.

The tube member 16 is disposed between the outer housing 12 and the piston member 13. The purpose of the tube member 16 is to inhibit the movement of the first seal member 14 in the axial direction (of the drive shaft) when the piston member 13 moves away from the release bearing 18. The tube member 16 has a channel portion 16a to flow hydraulic oil close to the hydraulic channel 12b.

The hydraulic chamber 17 is an annular hydraulic chamber surrounded by the inner housing 11, outer housing 12 and piston member 13. The chamber 17 is connected to, e.g., a clutch master cylinder (not shown) via hydraulic channel 12b.

The release bearing 18 is mounted to the mounting portion 13a of the piston member 13. An inner lace (casing) 18a of the release bearing 18 is a non-rotational lace (casing) fixed to the piston member 13. An end face of an outer lace 18b of the release bearing 18 is usually connected with diaphragm spring (not shown) by spring force of the spring member 19, the other end face of the outer lace 18b is apart from a cylindrical member 20. Thus the outer lace 18b of the release bearing 18 rotates with diaphragm spring (not shown). The diaphragm spring (not shown) pushes a clutch disk (not shown) onto a flywheel (not shown) tightly via a pressure plate (not shown).

The spring member 19 is interposed between the outer housing 12 and the cylindrical member 20 along the drive shaft 20 in the axial direction. One end (fixed end) of the spring member 19 contacts the outer housing 12 and the other end (movable end) of the spring member 19 contacts the cylindrical member 20. The spring member 19 biases the cylindrical member 20 toward the diaphragm spring (not shown).

The cylindrical member 20 is disposed on the external surface of drum-shaped portion of the outer housing 12 and contacts with the front end of the inner lace18a of the release bearing 18.

Next, the movement of the hydraulic clutch releasing device in accordance with embodiment 1 will be explained. At first a clutch pedal (not shown) is stepped down, then hydraulic oil is supplied into the hydraulic chamber 17 from a clutch master cylinder (not shown) via the hydraulic channel 12b, and the oil pressure in the hydraulic chamber 17 is increased. When the hydraulic oil is supplied into the hydraulic chamber 17 via hydraulic channel 12b, the oil passes through the channel portion 16a of the tube member 16. And as the oil pressure in the hydraulic chamber 17 is increased, the piston member 13 moves (slides) toward the diaphragm spring (not shown). The movement of the piston member 13 is transmitted to a center portion of the diaphragm spring (not shown) via the release bearing 18, and the diaphragm spring (not shown) deforms elastically to disengage the engagement between the clutch disk (not shown) and the flywheel (not shown).

On the other hand, when the clutch pedal (not shown) is released, the hydraulic oil in the hydraulic chamber 17 is discharged through the channel portion 16a of the tube member 16 via the hydraulic channel 12b.

According to embodiment 1, the tube member 16 disposed in a slit (space) of radial direction between the outer housing 12 and the piston member 13 inhibits the first seal member 14 from sliding along the internal wall surface of the outer housing 12. Also the shape (configuration) of the outer housing 12 is designed as separable parts divided in the axial direction, the outer housing will be fabricated by die-casting or resin molding requiring almost and no turning machining, and thus, it is possible to make products at a lower cost.

### (Embodiment 2)

Next, embodiment 2 is explained using a figure. Figure 2 illustrates a cross-sectional view of a structure of hydraulic clutch releasing device in accordance with embodiment 2 of the present invention.

In the hydraulic clutch releasing device in accordance with embodiment 2, the structure of the outer housing and the tube member is different compared to the hydraulic clutch releasing device in accordance with embodiment 1 but the other structure requires unchanged.

The outer housing 12 is disposed surrounding the inner housing 11 and comprises a shoulder portion 12a, a hydraulic channel 12b and a stopper portion 12c. The shoulder portion 12a is a portion for receiving the seal member 14, i.e., a shoulder-shaped portion incurved from the edge directed to the side of the release bearing 18. The hydraulic channel 12b is a passage of hydraulic oil supplied from a clutch master cylinder (not shown). The stopper portion 12c is a portion to inhibit a tube member 16 from sliding, and a step (stage) or protruding portion formed on the internal surface of the outer housing.

The tube member 16 comprises a channel portion 16a and a counter-stopper portion 16b. The channel portion 16a is a passage of hydraulic oil formed near a contacting part against the inner housing 11 and has an orifice function and may be a groove (see Fig. 2) or through hole, and so on. The counter-stopper portion 16b is a portion engaged by the stopper portion 12c and may be, e.g., a step. The tube member 16 has an inner radius with an appropriate fitting clearance against the piston member 13.

Next, the movement of the hydraulic clutch releasing device in accordance with embodiment 2 will be explained. A clutch pedal (not shown) is stepped down and hydraulic oil is supplied into the hydraulic chamber 17 via the hydraulic channel 12b, and the piston member 13 begins to move toward the release bearing 18. Then the tube member 16 moves with the piston member 13 toward the release bearing 18 due to the fitting clearance and the contacting faces of the tube member 16 and the flange portion 11b become apart (open) to form an oil passage. At this step the channel portion 16a does not function as an orifice. And then the counter-stopper portion 16b of the tube member 16 comes to engage with the stopper portion 12c of the outer housing 12. Thereafter that the piston member 13 and the tube member 16 operate under the relatively displaced condition in the axial direction.

On the other hand, when the clutch pedal (not shown) is released, the piston member 13 begins to move in the reverse direction by a counter force of the clutch (diaphragm spring) and the tube member 16 moves with piston member 13 due to the fitting clearance until one (distal) end of the piston member 13 contacts the flange portion 11b of the inner housing 11, and most of the hydraulic oil returns to the hydraulic channel 12b via the channel portion 16a of the tube member 16.

According to the embodiment 2, the restricted (throttled) channel portion disposed in the tube member 16 will regulate hydraulic flow rate even when the clutch pedal is returned quickly and prevent transmission of an excessive torque caused by quick clutch-engaging. And thus when the fitting clearance of the tube member 16 and the piston member 13 is adjusted (set to a small value), the piston member moves without resistance in case where the piston member is pushed in the reverse direction to the stroke when a figure (or posture) of diaphragm spring (not shown) is changed through wear (abrasion) of the clutch friction disk (not shown). Further, by disposing the stopper portion 12c on the outer housing 12, the counter-stopper portion 16b of the tube member 16 comes to abut against the stopper portion 12c of the outer housing 12 such that the tube member 16 does not squash (urge pressure) against the first seal member 14.

### (Embodiment 3)

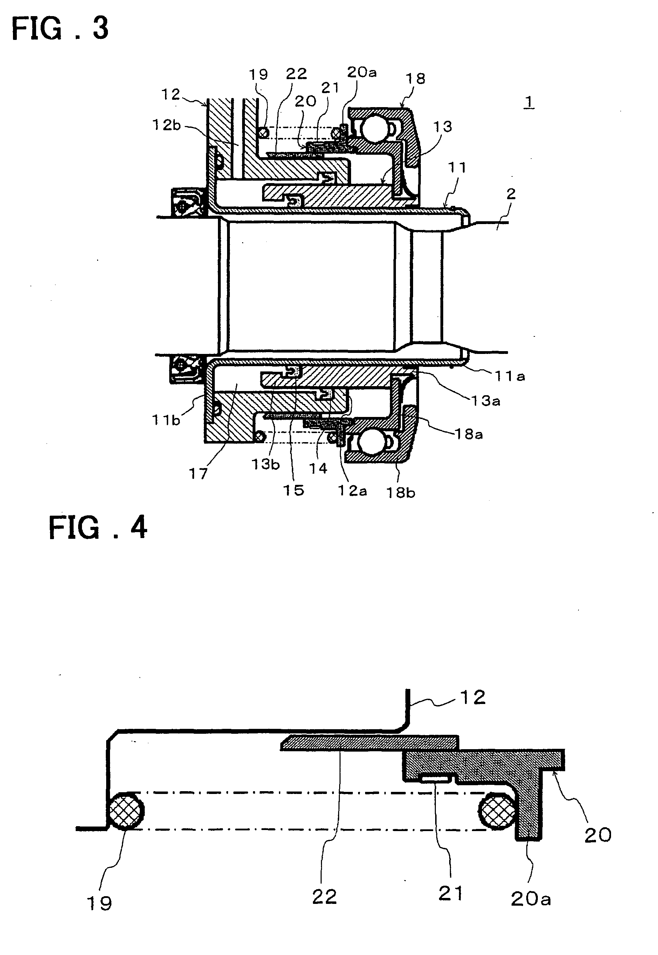

Embodiment 3 of hydraulic clutch releasing device of the present invention is explained using a figure. Figure 3 illustrates a partial cross-sectional view of a structure of a hydraulic clutch releasing device in accordance with embodiment 3 of the present invention. Figure 4 illustrates an enlarged partial cross-sectional view of a part including a first cylindrical member and a second cylindrical member of the hydraulic clutch releasing device in accordance with embodiment 3 of the present invention.

The hydraulic clutch releasing device 1 comprises an inner housing 11, an outer housing 12, a piston member 13, a first seal member 14, a second seal member 15, a hydraulic chamber 17, a release bearing 18, a spring member 19, a first cylindrical member 20, a compression ring 21 and a second cylindrical member 22.

The inner housing 11 is an annular (drum-shaped, tubular) member and comprises a tubular portion 11a and a flange portion 11b. The tubular portion 11a surrounds a drive shaft 2 of a transmission. The flange portion 11b is an extending portion toward radial direction from one edge of the tubular portion 11a. The inner housing 11 is fixed on a clutch housing (not shown) through which the shaft 2 is passed. The drive shaft 2 is an input shaft for transmission of a car.

The outer housing 12 is disposed surrounding the inner housing 11 and comprises a shoulder portion 12a and a hydraulic channel 12b. The shoulder portion 12a is a portion for receiving the first seal member 14, i.e., a shoulder-shaped portion incurved from the edge directed to the side of the release bearing 18. The hydraulic channel 12b is a passage of hydraulic oil supplied from a clutch master cylinder (not shown) and so on.

The piston member 13 is disposed between the inner housing 11 and the outer housing 12, slides in the axial direction of the drive shaft 2 and comprises a mounting portion 13a and a shoulder portion 13b. The mounting portion 13a is a portion to mount (an inner lace 18a of) the release bearing 18, and not covered by the outer housing 12, and disposed at an external surface of the inner housing 11. The shoulder portion 13b receives the second seal member 15 and is shoulder-shaped portion, extruding toward the hydraulic chamber 17. The piston member 13 does not rotate so as to prevent oil leakage due to deterioration of sealing ability of the first seal member 14 and the second seal member 15.

The first seal member 14 is an annular seal member sealing (confining) the hydraulic chamber 17 disposed between the outer housing 12 and the piston member 13, and is received in the shoulder portion 12a of the outer housing 12. The first seal member 14 is engaged (retained) by the shoulder portion 12a of the outer housing 12 when the piston member 13 moves toward the release bearing 18, and is also engaged (retained) by the shoulder portion 12a when the piston member 13 moves (contrariwise).

The second seal member 15 is an annular seal member sealing (confining) the hydraulic chamber 17 disposed between the inner housing 11 and the piston member 13, and is received in the shoulder portion 13b of the piston member 13 to move (follow) in the axial direction of the drive shaft 2.

The hydraulic chamber 17 is an annular hydraulic chamber surrounded by the inner housing 11, outer housing 12 and piston member 13. The chamber 17 is connected to, e.g., a clutch master cylinder (not shown) via the hydraulic channel 12b.

The release bearing 18 is mounted to the mounting portion 13a of the piston member 13. An inner lace (casing) 18a of the release bearing 18 is a non-rotational casing fixed to the piston member 13. One end face of an outer lace (casing) 18b of the release bearing 18 is usually connected with diaphragm spring (not shown) by spring force of the spring member 19, the other end face of the outer casing 18b is apart from a first cylindrical member 20. Thus the outer casing 18b of the release bearing 18 rotates with diaphragm spring (not shown). The diaphragm spring (not shown) pushes a clutch disk (not shown) onto a flywheel tightly via a pressure plate (not shown).

The spring member 19 is disposed interjacent between the outer housing 12 and the first cylindrical member 20 along the drive shaft 20 in the axial direction. One end (fixed end) of the spring member 19 contacts the outer housing 12 and the other end (movable end) of the spring member 19 contacts the flange portion 20a of the first cylindrical member 20. The spring member 19 pushes the first cylindrical member 20 toward the diaphragm spring (not shown).

The first cylindrical member 20 is disposed around the external surface of the second cylindrical member 22 and a drum portion of the outer housing 12 with a predetermined space and mounted to the end of the inner casing 18a of the release bearing 18. The first cylindrical member 20 moves with the piston member 13 via the inner casing 18a (non-rotational casing) of the release bearing 18 but it does not rotate. The first cylindrical member 20 comprises a flange portion 20a extending in radial direction in close proximity of the inner casing 18a. The spring member 19 abuts against the flange portion 20a of the first cylindrical member 20. The first cylindrical member 20 has a plurality of notches (not shown) on the edge on the side of the outer housing 12. The compression ring 21, which holds the second cylindrical member 22 by compressing force, is disposed externally around the first cylindrical member 20 including the notches.

The second cylindrical member 22, configured to be slidable, is disposed between the external surface of the drum portion of the outer housing 12 and the internal surface of the first cylindrical member 20. The second cylindrical member 22 is held by the compression ring 21 which is fitted around the first cylindrical member 20.

Next, the movement of the hydraulic clutch releasing device in accordance with embodiment 3 will be explained. At first a clutch pedal (not shown) is stepped down, then hydraulic oil is supplied into the hydraulic chamber 17 from a clutch master cylinder (not shown) via the hydraulic channel 12b, and then the oil pressure in the hydraulic chamber 17 is increased. As the oil pressure in the hydraulic chamber 17 is increased, the piston member 13 moves (slides) toward the diaphragm spring (not shown). The movement of the piston member 13 is transmitted to a center portion of the diaphragm spring (not shown) via the release bearing 18, and the diaphragm spring deforms elastically to disengage the engagement of the clutch disk (not shown) and the flywheel (not shown). At this time the first cylindrical member 20 moves (slides) toward the diaphragm spring (not shown) with the movement of the piston member 13 via release bearing 18. And the second cylindrical member 22 follows up the movement of the first cylindrical member 20 because the member 22 is held by the compression ring 21.

On the other hand, when the clutch pedal (not shown) is released, the hydraulic oil in the hydraulic chamber 17 is discharged through the hydraulic channel 12b. Then the piston member 13 moves (slides) apart from the diaphragm spring (not shown). By this movement of the piston member 13, the diaphragm spring engages the clutch disk (not shown) with the flywheel (not shown). At this time the first cylindrical member 20 also moves (slides) apart from the diaphragm spring (not shown) by the movement of the piston member 13 with release bearing 18. And the second cylindrical member 22 follows up the movement of the first cylindrical member 20.

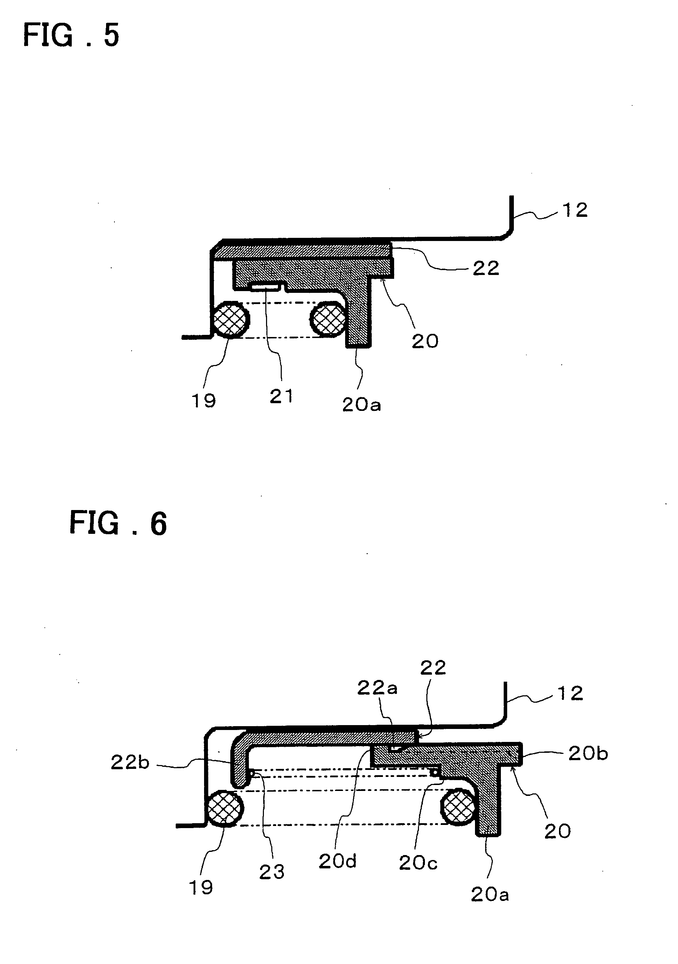

Now referring to figure 5, as facing abrasion (wear) of the clutch disk (not shown) proceeds, the piston member 13 displaces apart from (in a reverse direction toward) a diaphragm spring (not shown) even without supplying oil into the hydraulic chamber 17. At the same time the first cylindrical member 20 and the second cylindrical member 22 also displace apart from the diaphragm spring (not shown). When the edge of second cylindrical member 22 contacts with the outer housing 12, the second cylindrical member 22 will stop displacing but the first cylindrical member 20 will continue displacing. Then the second cylindrical member 22 is pushed into the first cylindrical member 20 due to slip between them. Once the second cylindrical member 22 is pushed, into the first cylindrical member 20, the second cylindrical member 22 keeps its situation because the compression ring 21 holds the second cylindrical member 22. After that the first cylindrical member 20 and the second cylindrical member 22 follow up the movement of the piston member 13 with keeping their situation.

According to the embodiment 3, the first cylindrical member 20 extending from the release bearing 18 is disposed to cover the external surface of the outer housing 12, it prevents adherence of taint or dust in a clutch housing (not shown) on the external surface of the first seal member 14 and the piston member 13. And wider overlapping area in the axial direction of the cylindrical portion of the outer housing 12 will be ensured by the first cylindrical member 20 and the second cylindrical member 22 even when the facing of the clutch disk is worn.

### (Embodiment 4)

Next, embodiment 4 of a hydraulic clutch releasing device of the present invention is explained using a figure. Figure 6 illustrates an enlarged partial cross-sectional view of a structure of the hydraulic clutch releasing device in accordance with embodiment 4 of the present invention.

In embodiment 4, there is no compression ring (the ring 21 of Figure 3) and the second cylindrical member 22 is not held by the ring and is slidable inside the first cylindrical member 20. The second cylindrical member 22 has a protruding (lug) portion 22a on the external surface of the cylindrical portion and the first cylindrical member 20 has a guide groove 20b on the internal surface of the cylindrical portion to guide sliding of the protruding portion 22a. The first cylindrical member 20 has a stopper portion 20d to stop the protruding portion 22a to prevent the second cylindrical member 22 from slipping out of the first cylindrical member 20. The second cylindrical member 22 has a flange portion 22b of the size that does not interfere with the spring member 19 at the opposite end of the first cylindrical member 20. The first cylindrical member 20 has a shoulder portion 20c at the external side of the cylindrical portion. A second spring member 23 is disposed between the flange portion 22b of the second cylindrical member 22 and the shoulder portion 20c of the first cylindrical member 20, on the internal side of the spring member 19. The second spring member 23 pushes the first cylindrical member 20 and the second cylindrical member 22 apart from one another/the other structure is the same as embodiment 3.

Next, the movement of the hydraulic clutch releasing device in accordance with embodiment 4 will be explained. When the flange portion 22b of the second cylindrical member 22 does not contact the outer housing 12, the first cylindrical member 20 and the second cylindrical member 22 move (slide) following up the movement of the piston member 13 via the release bearing18.

During the time when the flange portion 22b of the second cylindrical member 22 abuts against the outer housing 12, the first cylindrical member 20 moves (slides) following up the movement of the piston member 13 via the release bearing18 but the second cylindrical member 22 stays at its position because of the pressure toward the outer housing 12 by the second spring member 23. That is, the first cylindrical member 20 moves (slides) outside of the fixed second cylindrical member 22.

According to embodiment 4, the second spring member 23 is disposed between the first cylindrical member 20 and the second cylindrical member 22, and thus it is possible to return the position of the first cylindrical member 20 and the second cylindrical member 22 to the initial position when only a clutch cover (not shown) or a clutch disk (not shown) is replaced, therefore replacement or repair of the hydraulic clutch releasing device is not necessary. Also when the piston member 13 strokes forward (when the piston member 13 is pushed out), the second cylindrical member 22 elongating from the first cylindrical member 20 will ascertain blocking of incoming dust.

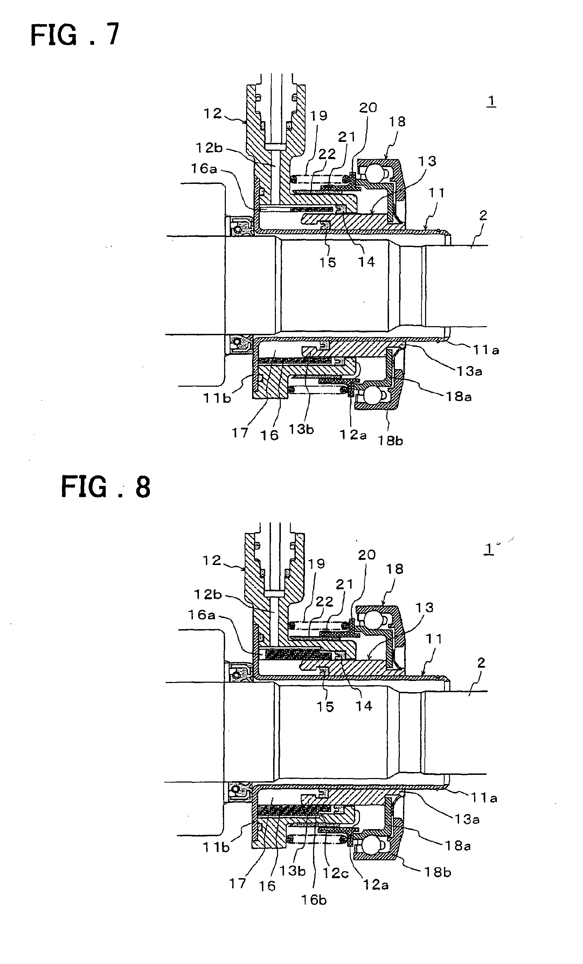

Next, another embodiments are explained using figures. Figure 7 illustrates a cross-sectional view of a structure of a hydraulic clutch releasing device in accordance with embodiment 5 of the present invention. Figure 8 illustrates a cross-sectional view of a structure of a hydraulic clutch releasing device in accordance with embodiment 6 of the present invention.

A hydraulic clutch releasing device in accordance with embodiment 5 is a combination of the hydraulic clutch releasing device in accordance with the embodiment 1 (1 in the Figure 1) and both compression ring (21 in the Figure 3) and second cylindrical member (22 in the Figure 3) of the hydraulic clutch releasing device in accordance with embodiment 3. Referring to Figure 7, the second cylindrical member 22 is disposed slidably between the external surface of the drum portion of the outer housing 12 and internal surface of the cylindrical member 20 and held by compression ring 21 which is fitted around the cylindrical member 20. This structure provides the effect of combination of that of both the embodiments 1 and 3. In a hydraulic clutch releasing device in accordance with embodiment 5, not shown, the second spring member (23 in the Figure 6) in accordance with embodiment 4 may be disposed between the cylindrical member 20 without the spring member 21 and the second cylindrical member 22. This structure provides the effect of combination of that of both the embodiments 1 and 4.

A hydraulic clutch releasing device in accordance with embodiment 6 is a combination of the hydraulic clutch releasing device in accordance with embodiment 2 (1 in the Figure 2) and both compression ring (21 in the Figure 3) and second cylindrical member (22 in the Figure 3) of the hydraulic clutch releasing device in accordance with embodiment 3. Referring to Figure 8, the second cylindrical member 22 is disposed slidably between the external surface of the drum portion of the outer housing 12 and internal surface of the cylindrical member 20 and held by compression ring 21 which is fitted around the cylindrical member 20. This structure provides the effect of combination of that of both the embodiments 2 and 3. In a hydraulic clutch releasing device in accordance with embodiment 6, not shown, the second spring member (23 in the Figure 6) in accordance with embodiment 4 may be disposed between the cylindrical member 20 without the spring member 21 and the second cylindrical member 22. This structure provides the effect of structure of that of both the embodiments 2 and 4.

## Claims

1. A hydraulic clutch releasing device, comprising,
an annular inner housing surrounding a drive shaft;
an outer housing surrounding the inner housing;
an annular piston member disposed between the inner housing and the outer housing movable in the axial direction of the drive shaft;
a release bearing movable along with movement of the piston member in the axial direction of the drive shaft;
a first seal member disposed between the outer housing and the piston member; and
a second seal member disposed between the inner housing and the piston member so as to follow up the movement of the piston member;
wherein a hydraulic chamber is formed between the inner housing and the outer housing by the inner housing, the outer housing and the piston member, and the engaging or disengaging state of the clutch is changed by moving the release bearing along with the piston member in the axial direction of the drive shaft by feeding hydraulic oil into the hydraulic chamber; **characterized in that**
a tube member disposed between the inner housing and the outer housing, that prevents the first seal member from movement in the axial direction of the drive shaft.

2. The hydraulic clutch releasing device of claim 1, **characterized in that** the tube member is disposed with a clearance in the axial direction of the drive shaft relative to the inner housing and the first seal member.

3. The hydraulic clutch releasing device of claim 1 or 2, **characterized in that** the tube member has a channel portion to form an orifice for pressurized hydraulic oil by contacting with the inner housing, and is formulated such that the tube member moves apart from a contacting face of the inner housing when the piston member is pushed out toward the release bearing side.

4. The hydraulic clutch releasing device according to one of the claims 1 to 3, **characterized in that** the tube member has a predetermined fitting clearance to an external surface of the piston member.

5. The hydraulic clutch releasing device according to one of the claims 1 to 4, **characterized in that** the outer housing has a stopper portion on its internal circumferential surface and the tube member has a counter-stopper portion which is engaged with the stopper portion.

6. The hydraulic clutch releasing device according to one of the claims 1 to 5 **characterized by** comprising:
a first cylindrical member directly or indirectly mounted to the piston member so as to cover the outer housing; and
a second cylindrical member disposed at an internal side of the first cylindrical member and also disposed at an external side of the outer housing wherein;
the first cylindrical member and the second cylindrical member seal up the hydraulic chamber from exterior.

7. The hydraulic clutch releasing device of claim 6, **characterized in that** the second cylindrical member slides relative to the internal surface of the first cylindrical member and the external surface of the internal [sic outer] housing.

8. The hydraulic clutch releasing device of claim 6 or 7, **characterized by** comprising a compression ring disposed on an external side of the first cylindrical member and holds the second cylindrical member compressively.

9. The hydraulic clutch releasing device of claim 6 or 7, **characterized by** further comprising a spring member disposed between the first cylindrical member and the second cylindrical member so as to push the first cylindrical member and the second cylindrical member against one another.

10. The hydraulic clutch releasing device of claim 9, **characterized in that** the second cylindrical member comprises a protruding portion on an external surface thereof, and
the first cylindrical member comprises a guide groove on the internal surface thereof to guide a slide of the protruding portion.

11. A hydraulic clutch releasing device, comprising:
a hydraulic chamber formed between an inner housing and an outer housing by the inner housing, the outer housing, and a piston member, wherein the piston member and a release bearing are moved in the axial direction of a drive shaft by hydraulic pressure in the hydraulic chamber to disengage a clutch, **characterized by** further comprising;
a first cylindrical member directly or indirectly mounted to the piston member and disposed to cover the outer housing; and
a second cylindrical member disposed slidably within an internal surface of the first cylindrical member and also slidably on an external surface of the outer housing.

12. The hydraulic clutch releasing device of claim 11, comprising a compression ring disposed on an external side of the first cylindrical member and holds the second cylindrical member compressively.

13. The hydraulic clutch releasing device of claim 11, **characterized by** further comprising a spring member disposed between the first cylindrical member and the second cylindrical member so as to push the first cylindrical member and the second cylindrical member against one another.

14. The hydraulic clutch releasing device of claim 13, **characterized in that** the second cylindrical member comprises a protruding portion on an external surface thereof and
the first cylindrical member comprises a guide groove on the internal surface thereof to guide a slide of the protruding portion.
